# EUROPEAN PATENT APPLICATION

(11) **EP 4 755 168 A1**
(43) Date of publication of application: **10.06.2026**
(21) Application number: 25214153.6
(22) Date of filing: 07.11.2025
(51) Int. Cl.: A01D 34/66, A01D 43/10

(54) **CROP MOISTURE MEASUREMENT IN MOWER CONDITIONERS**

(30) Priority: 09.12.2024 US 202418973244
(71) Applicant: Deere & Company, Moline, IL 61265 (US)
(72) Inventor: SOMAROWTHU, MAHESH, 68163 Mannheim (DE); ROTH, DARIN L, 68163 Mannheim (DE)
(74) Representative: Stein, Stefan

(57) **Abstract**

A crop harvesting implement includes a frame and a cutting bar supported by the frame. The cutting bar includes a plurality of rotary cutters disposed along an axis which is transverse to a forward working direction of the crop harvesting implement. A crop conditioner is supported by the frame along an axis transverse to the working direction and rearward of the cutting bar with respect to the working direction. A crop converging mechanism is supported by the frame. The crop converging mechanism may be configured to move the cut crop material in a downstream direction from the plurality of rotary cutters toward the crop conditioner. At least one moisture sensor is located upstream of the crop conditioner and configured to sense a moisture content of the cut crop material.

## Description

### FIELD OF THE DISCLOSURE

The present invention relates to a mower configured to cut crop material, and more particularly to a crop harvesting implement including a moisture sensor.

### BACKGROUND

Agricultural equipment, such as a tractor or a self-propelled windrower, includes a prime mover which generates power to perform work. In the case of a tractor, for instance, the prime mover is often a diesel engine that generates power from a supply of diesel fuel. The diesel engine drives a transmission which moves wheels or treads to propel the tractor across a field. In addition to providing power to wheels through a transmission, tractors often include a power takeoff (PTO) which includes a shaft coupled to the transmission and driven by the engine.

In different embodiments, the mower conditioner is a separable machine which is configured to be attached to and detached from a tractor, which either pushes the mower conditioner or pulls the mower conditioner. In the separable mower conditioner, the mower conditioner is removably coupled to the tractor and is readily moved from one tractor to another if desired. In these embodiments, the mower conditioner is powered by the PTO of the tractor or a hydraulic motor system thereof.

In another embodiment, the mower conditioner is configured as part of the vehicle and is generally known as a windrower. In the windrower configuration, the mower conditioner is configured as a machine substantially integral with a tractor, such that the mower conditioner is not readily moved from one tractor to another, but instead both the tractor and mower conditioner are integrally designed. In a windrower, the mower conditioner is powered by the prime mover, the PTO, or a hydraulic system including a hydraulic motor.

Mower-conditioners typically operate at a ground speed of from five to ten miles per hour (mph). When the vehicle is operated at this speed, crop moves across a cutting bar, flows past one or more converging augers, where the crop is transferred to a conditioner, and then expelled out the rear of the mower-conditioner to form a windrow. The uniformity of the formed windrow density (defined as quantity of crop per unit volume) depends not only on the features and function of the mower conditioner, but also on the type and condition of the crop being cut. For instance, cut crop can be light, heavy, sparse, thick, and of variable moisture content.

There is a need for improved systems for measuring the moisture content of the cut crop material in a crop harvesting machine such as a mower conditioner.

### SUMMARY

In one embodiment, a crop harvesting implement configured to cut crop material includes a frame and a cutting bar supported by the frame. The cutting bar includes a plurality of rotary cutters disposed along an axis which is transverse to a forward working direction of the crop harvesting implement, the rotary cutters being configured to cut the crop material. A crop conditioner is configured to condition the cut crop material wherein the crop conditioner is supported by the frame along an axis transverse to the working direction and rearward of the cutting bar with respect to the working direction. A crop converging mechanism is supported by the frame and is configured to move the cut crop material in a downstream direction from the plurality of rotary cutters toward the crop conditioner. At least one moisture sensor is located upstream of the crop conditioner and configured to sense a moisture content of the cut crop material.

### BRIEF DESCRIPTION OF THE DRAWINGS

The above-mentioned aspects of the present invention and the manner of obtaining them will become more apparent and the invention itself will be better understood by reference to the following description of the embodiments of the invention, taken in conjunction with the accompanying drawings, wherein:
FIG. 1 is a side elevational view of a windrower including a tractor coupled to a mower conditioner.
FIG. 2 is a front elevational view of a crop harvesting implement.
FIG. 3 is a partial perspective view of a crop harvesting implement taken along the line 3-3 of FIG. 2.
FIG. 4 is a side elevational view of the partial perspective view of FIG. 3.
FIG. 5 is a side elevational view of another embodiment.
FIG. 6 is a top plan view of a crop harvesting implement.
FIG. 7 is a perspective view of a cutting bar, an undershot rotating element, and first and second converging drums.
FIG. 8 is partial perspective view of another embodiment of a crop harvesting implement.
FIG. 9 is a side elevational view of the partial perspective view of FIG. 8.
FIG. 10 is a schematic drawing of a control system of the crop harvesting implement.
FIG. 11 is a side elevation view similar to FIG. 4 of an alternative embodiment shown from the opposite side of the implement as compared to FIG. 4.
FIG. 12 is an enlarged perspective view of a portion of the implement of FIG. 11 adjacent one end of the converging auger.

### DETAILED DESCRIPTION

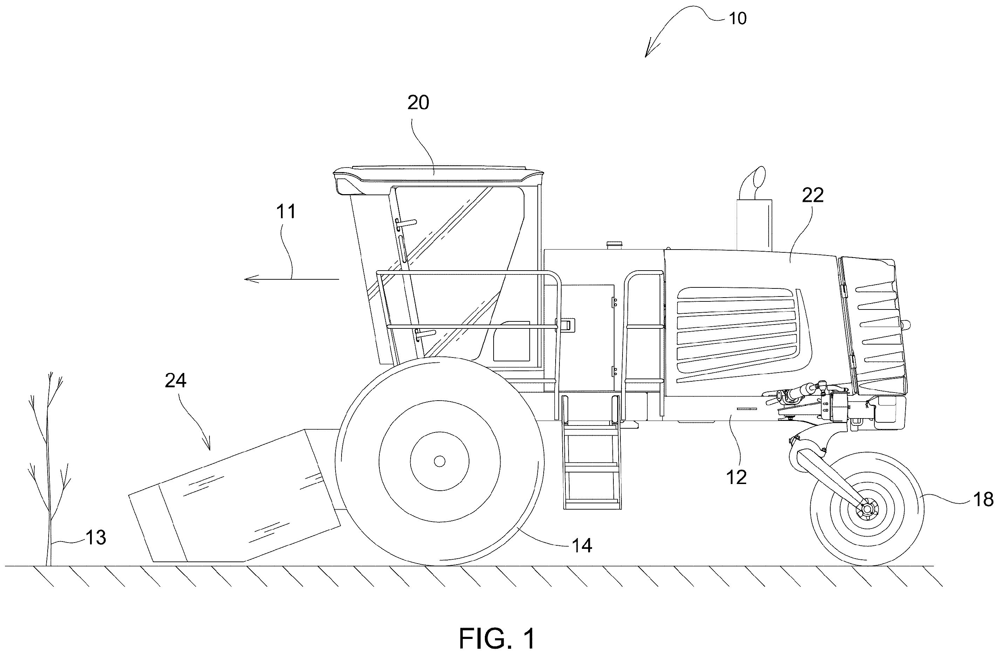

FIG. 1 is a side elevational view a self-propelled crop harvesting machine 10 operable to cut and collect standing crop 13 in a field, condition the cut crop as it moves through a mower conditioner machine to improve its drying characteristics, and then return the cut and conditioned crop material to the field in a windrow or swath. The crop harvesting machine is also known as a mower conditioner or a windrower. The crop harvesting machine 10 moves along the field in a working direction 11. The crop harvesting machine 10 includes a main frame 12 supported on driven right and left front wheels, of which only the left front wheel 14 (with respect to the operator) is shown and on right and left caster mounted rear wheels, of which only a left rear wheel 18 is shown. Carried on a forward end region of the main frame 12 is a cab 20. Mounted on the main frame 12 behind the cab 20 is a housing 22 within which is located a prime mover (not shown), such as an internal combustion engine. A harvesting header 24 is coupled to and supported by the forward end of the main frame 12. As further noted below, the harvesting header 24 may also be referred to as a crop harvesting implement 24. Operator controls (not shown) are provided in the cab 20 for operation of the crop harvesting machine 10, including the attached harvesting header 24. The harvesting header, in one embodiment, includes one or more ground engaging devices, such as one or more skid shoes or wheels (not shown), to support the harvesting header 24 during movement across a field. In one embodiment, the harvesting header does not include a traction drive. All of its power comes from the windrower traction unit or the tractor.

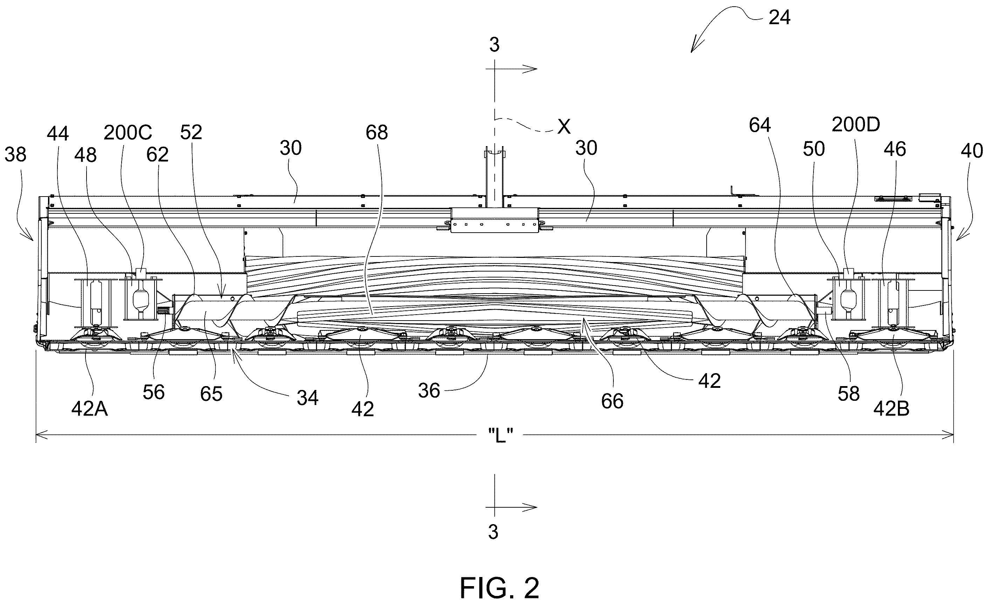

FIG. 2 is an elevational front view of the harvesting header 24. In this view, the harvesting header 24 includes a header frame 30 to which crop cutting and crop conditioners are attached. The header frame 30 may also be referred to as an implement frame 30, and in the context of the crop harvesting implement 24 the implement frame 30 may simply be referred to as a frame 30. As illustrated, the harvesting header extends along a length "L" which defines a crop cutting width provided by a cutting bar 34. The cutting bar 34 is transverse with respect to the moving direction 11 of the windrower 10 of FIG. 1. In one embodiment, the cutting bar 34 is aligned substantially perpendicularly to the moving direction 11 of the windrower 10. It will be understood that when a component is described herein as "supported" from or by the header frame 30 this includes both direct and indirect support. The component may be indirectly supported from the header frame 30 if there is an intervening component supported by the header frame 30 which in turn supports the named component.

In other embodiments having a separable mower conditioner, the mower conditioner is either pushed or pulled by a tractor such that the cutting bar is operated generally perpendicularly to the direction of travel and either parallel to the ground or with the front edge of the cutting bar tipped lower than the back edge. Consequently, the length L, defined by the cutting bar, defines a line generally perpendicular to the direction of travel 11, such that the cutting bar, in different embodiment, operates with a fore-aft tilt or substantially no fore-aft tilt. Windrowers and mowers include such configurations. In any of these embodiments those components as described herein as part of the harvesting header 24 may generally be referred to as a crop harvesting implement 24.

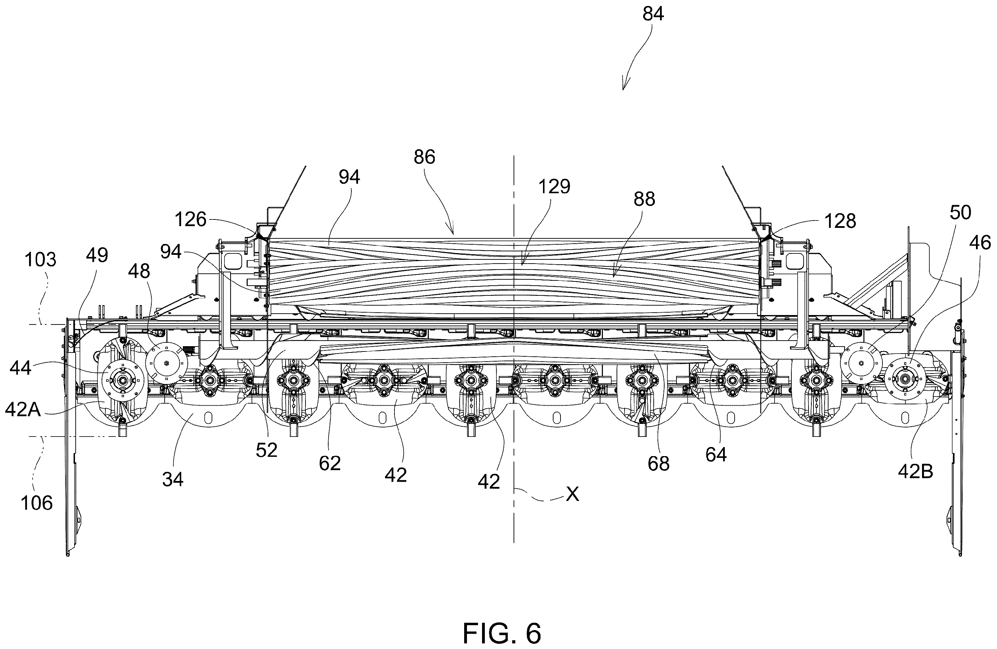

The cutting bar 34 includes a substantially planar support member 36 which extends from a first side 38 of the header frame 30 to a second side 40 of the header frame 30. The support member 36 is configured to support a plurality of rotary cutters 42, each of which is supported by the support member 36 for rotation about respective centers each defining a rotational axis substantially perpendicular to the length L. The plurality of rotary cutters 42 define a rotary cutter zone which extend longitudinally along the cutter bar in which crop is cut and cut crop moves across the rotary cutters. At one end of the cutting bar 34 toward the first side 38, a first converging drum 44 is located above a rotary cutter 42A. A second converging drum 46 is located above a rotary cutter 42B. Each of the first and second converging drums 44 and 46 are operatively connected to the respective rotary cutters 42A and 42B, such that the first and second converging drums move in the same rotational directions as the respective rotary cutter 42A and 42B. The rotary cutters 42 may be arranged along the length of the support member 36 such that the rotary cutters 42 located leftward of a center line X, as illustrated, are driven in a counterclockwise direction when viewed from above and the rotary cutters 42 located rightward of the center line X are driven in a clockwise direction when viewed from above. See FIG. 6.

In one embodiment, the rotational direction of the cutters is generally toward the center with the front edge of the cutting bar such that the cutters located on the left-hand side of the drawing (the right-hand side of the cutting bar in the direction of operation) is counterclockwise. The rotational direction of the cutters on the right-hand side of FIG. 6 is clockwise. In other embodiments, the cutters located inboard of either the conditioner or the converging means are configured to rotate as pairs. As seen in FIG. 6, the outer two cutters on each end of the cutting bar rotate toward center, but the remaining cutters, in other embodiments, rotate as counter-rotating pairs. Other rotational patterns of the cutters may be used. For example, in one embodiment the cutter 42A may rotate clockwise and the cutter 42B may rotate counterclockwise.

A third converging drum 48 is located adjacently to the converging drum 44 and may rotate in the same direction as the converging drum 44. A fourth converging drum 50 is located adjacently to the converging drum 46 and may rotate in the same direction as the converging drum 46. Each of the converging drums 48 and 50 may be driven by a belt (not shown) which operatively couples each drum 48 and 50 to adjacent drums 44 and 46. The converging drums 48 and 50 are smaller than the converging drums 44 and 46. Due to the rotation of the converging drums, crop cut toward the sides 38 and 40 is directed toward the centerline X.

As further seen in FIG. 6, an arcuate shaped deflector plate 49 may be supported directly or indirectly from the header frame 30. The deflector plate 49 may be mounted to the header frame 30 by a bolted connection using plastic washers and spacers to electrically isolate the deflector plate 49 from the header frame 30. This will allow the deflector plate 49 to be used as an anode in a moisture sensing system as is further described below.

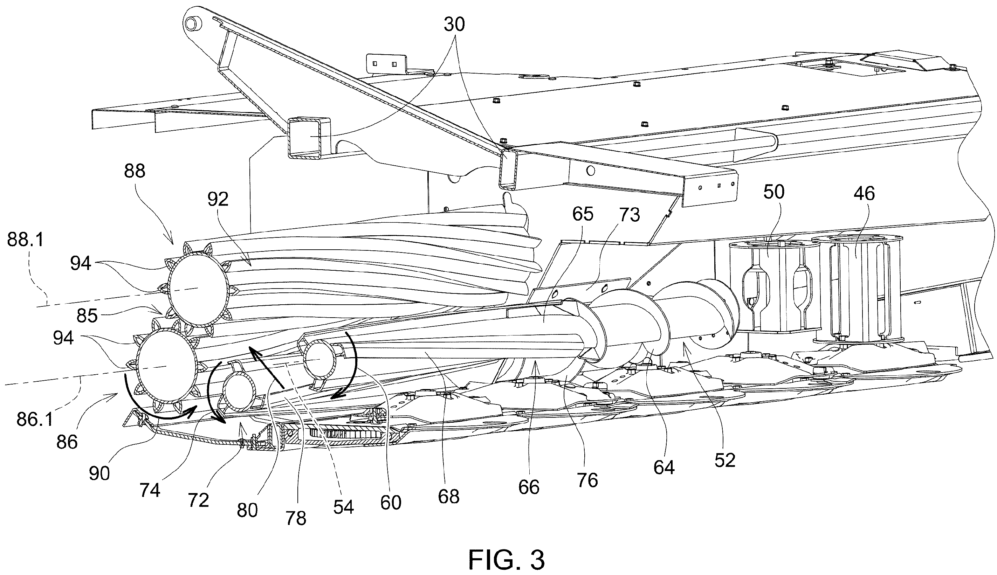

An undershot rotating element 52 is supported by the header frame 30 for rotational movement about a rotational axis 54. The undershot rotating element 52 may also be referred to as a first converging auger 52. See FIG. 3. The undershot rotating element 52 includes a length which extends along the longitudinal direction and between the converging drum 48 and 50. As illustrated, a first end 56 and a second end 58 are supported for rotation about the rotational axis 54 in a rotational direction 60 as illustrated in FIG. 3. Located adjacently to the first end 56 is a first flighting 62 and located adjacently to the second end 58 is a second flighting 64. The flightings extend from and are coupled to a cylindrical portion 65. The flightings 62 and 64 are arranged to move cut crop toward the centerline X and to a paddle section 66. The auger flighting moves cut crop toward the center of the machine. The paddle section 66 includes a plurality of paddles 68 each of which extends from and is coupled to the cylindrical portion 65. The paddles 68 extend between each of the first flighting 62 and the second flighting 64. The paddles 68 include a curved profile with respect to the rotational axis 54 and having end portions disposed adjacently to the first flighting 62 and second flighting 64 to contact cut crop. The paddles are located in key areas where the predominant direction of motion of the rotary cutters is to the front of the header 24. The paddles are configured to move the cut crop to the rear of the machine, with little movement of the crop towards the center of the paddles. The curve profile of the paddles reduces or substantially eliminates power spikes which could occur if the paddles were not curved, but were instead straight across. Cut crop, therefore, is moved away from the converging drums 48 and 50 toward the centerline X by the flightings 62 and 64 where it is pushed toward the rear of the rotary cutters 42 by paddles 68 and toward an overshot rotating element 72 of FIG. 3. The overshot rotating element 72 may also be referred to as a second converging auger 72. One or more angle shaped scrapers 73 may be fixed directly or indirectly to the header frame 30, and may be generally referred to as a fixed structure 73 fixed relative to the header frame 30. The scraper 73 may be mounted to the header frame 30 by a bolted connection using plastic washers and spacers to electrically isolate the scraper 73 from the header frame 30. This will allow the scraper 73 to be used as an anode in a moisture sensing system as is further described below. As used herein, terms undershot and overshot rotating elements can also be identified as undershot augers or overshot augers when having the included flightings which are configured to move cut crop in a fashion similar to an auger.

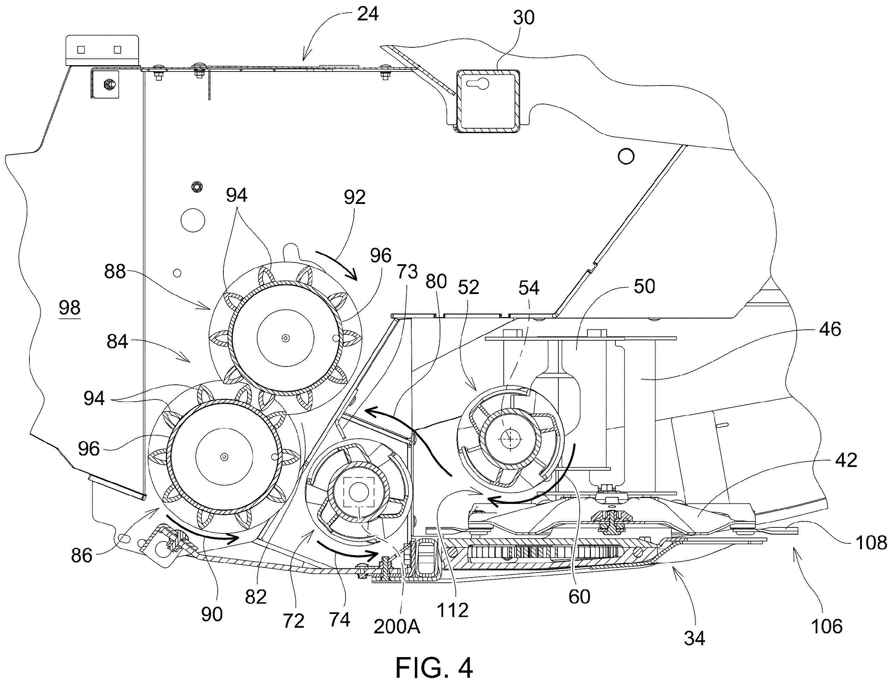

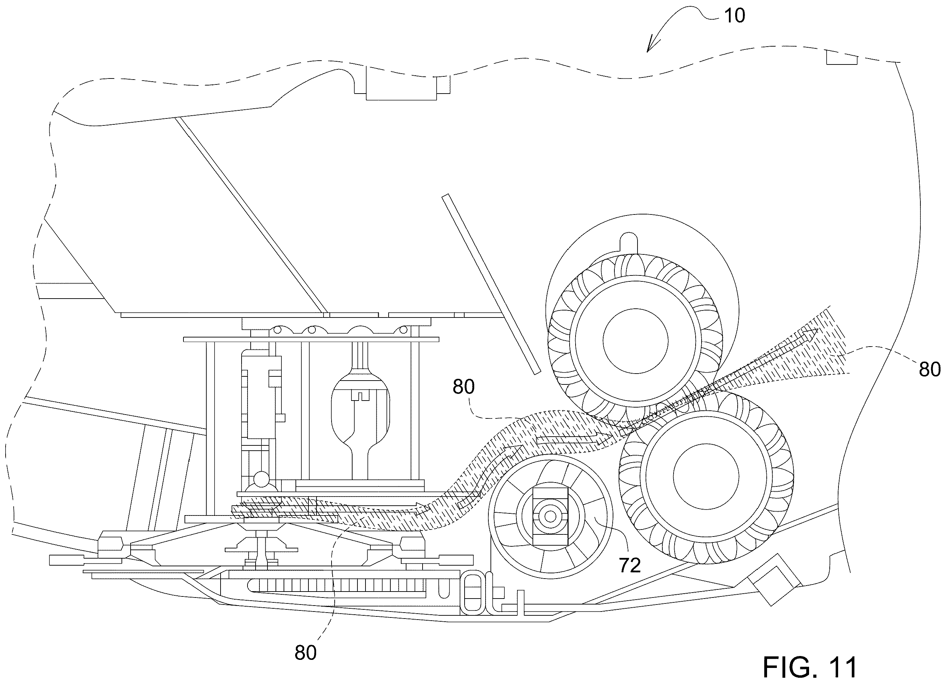

The overshot rotating element 72 is supported by the header frame 30 for rotational movement in a direction 74 which is opposite the rotational direction 60 of the undershot rotating element 52. In one embodiment and as illustrated in FIG. 3, the overshot rotating element 72 includes crop movement features of the same type as the undershot rotating element 52. The overshot rotating element 72, therefore includes first and second flightings, one of which, flighting 76, is shown. A paddle section 78 is disposed between the first and second flighting. The opposed rotations of undershot rotating element 52 and overshot rotating element 72 move the cut crop between the two augers 52 and 72 along a path 80. See also FIG. 4. The path 80 extends toward an interface 82 located at a crop conditioner 84, which in the illustrated embodiment includes a first conditioner roll 86 and a second conditioner roll 88. A further illustration of the path 80 of the cut crop through the crop harvesting machine is seen in Fig. 11.

The first conditioner roll 86 moves in a direction 90 which is opposite a direction 92 of the second conditioner roll 88. Each of the conditioner rolls 86 and 88 include a plurality of extensions or splines 94 extending from a cylindrical portion 96. The splines 94 of one roll 86 mesh with the splines 94 of the other roll 88 such that the cut crop moving along the path 80 and into the interface 82 is conditioned by pressing, crushing, or breaking the cut crop to reduce the rigidity of the cut crop, as well as to remove or at least release a waxy outer layer which can be found in the cut crop depending on the type of cut crop being conditioned. After cutting, the crop is conditioned by passing between the roll 86 and the roll 88 and out a back portion 98 of the harvesting header 24. The cut crop then moves to the field where it remains until use or collection.

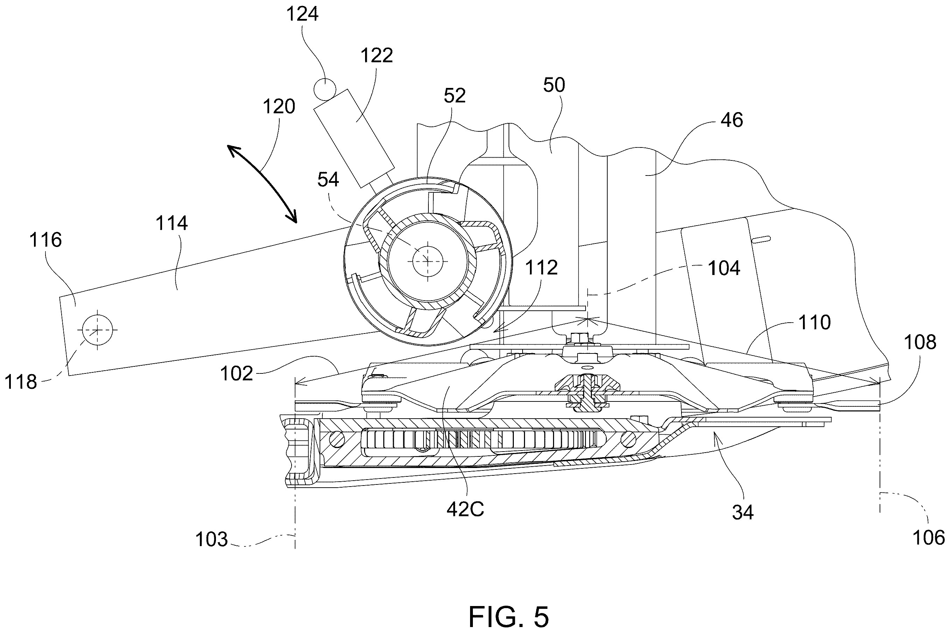

As can be seen in FIGS. 4 and 5, the undershot rotating element 52 may be supported above at least a portion of the cutting bar 34 and may be generally subtended by the plurality of rotary cutters 42, one of which, rotary cutter 42C, is shown. The cutting bar 34, therefore, underlies the plurality of rotating elements 52. In one embodiment as illustrated, a rotational axis 54 of the undershot rotating element 52 extends along the length of the cutting bar 34 and is generally disposed along and above a trailing portion 102 of the line of rotary cutters 42. As can be seen, the trailing portion 102 extends from a rotational axis 104 of the illustrated rotary cutter 42C to a trailing edge 103 of the cutter 42C along an incline defined by the rotary cutter. In other embodiments, the rotational axis 54 of the undershot rotating element 52 is disposed substantially directly above the rotational axis 104, disposed substantially above the trailing edge 103, or positioned at a location therebetween.

Placement of the rotational axis 54 above the trailing edge 103 places the flightings 62 and 64 and the paddle section 66 above the trailing edge 103 of each of the rotary cutters 42 which, in one embodiment, are transverse to the moving direction 11. In other embodiments, the position is generally aligned perpendicularly to the moving direction 11. The cut crop, which is cut at a leading edge 106, defined by a plurality of rotary cutter knives 108, moves across a leading portion 110 of the rotary cutters 42 and falls to the exposed surfaces of the rotary cutters 42 of both the leading portion 110 and a part of the trailing portion 102, depending on the location of the undershot rotating element 52. Crop moves from an input of the harvesting header 24 at the leading portion and exits though an output located after the crop conditioner 84 at the back portion 98.

The cut crop is moved by rotation 60 of the rotating element 52 into a space 112 defined between the outer edges of the flightings 62 and 64 and the paddle section 66 of the rotating element 52 and the rotary cutters 42.

In the embodiment of FIG. 4, this space is approximately 1.2 inches and remains substantially fixed along the length of the rotating element 52. The auger flight diameter is slightly larger than the paddle diameter, so this dimension of approximately 1.2 inches is slightly greater in the area of the paddles than under the flights. Each of the ends of the rotating element 52 is operatively connected to the header frame 30 for rotation about the rotational axis 54. In FIG. 4, the rotational axis 54 does not move with respect to the cutting bar 34 since the ends of the rotating element 52 are fixedly located for rotation at the header frame 30.

In another embodiment of FIG. 5, each end of the rotating element 52 is fixed to an arm, one of which is shown as arm 114 FIG. 5. Other types of linkages are used in different embodiments. A first end 116 of the arm 114 is rotatably coupled to the header frame 30 at a pivot location 118 about which the arm rotates in either a clockwise or counterclockwise direction 120. The arms 114, and therefore the rotating element 52, "floats" above, or moves with respect to an amount of the cut crop located between the undershot rotating element 52 and the rotary cutters 42. Consequently, while the rotating element 52 fixedly rotates about the axis 54, the axis 54 moves along an arc defined by the direction 120. Floating of the rotating element 52 provides additional clearance for heavy crop conditions. In FIG. 5, movement of the arm 114 is dampened in both directions 120 by a resilient element 122, such as a double acting hydraulic actuator, having one end coupled to one end of the arm or one end of the rotating element 52 and an end 124 fixed to the header frame 30. The resilient element 122 dampens movement of the rotating element 52 which moves away from the cutting bar 34 if the amount of cut crop moving between the rotary cutters 42 and rotating element 52 increases sufficiently to cause movement of the rotating element 52 away from the rotary cutters. In one embodiment, the distance between the rotating element 52 and the rotary cutters 42 of FIG. 5, when the rotating element 52 is at a resting position, is the same distance between the rotating element 52 and rotary cutters 42 defining the space 112 in FIG. 4. In other embodiments, however, the distance between the rotating element 52 and the rotary cutters 42 defining the space 112 is different, since rotating element 52 is supported by the arm 114 for movement with respect to the rotary cutters 42.

In other embodiments, the resilient element 122 restricts movement of the rotating element 52 away from the rotary cutters 42, while only the weight of the rotating element 52 moves the rotating element toward the rotary cutters 42. In this embodiment, a single acting hydraulic actuator is used. In other embodiments, the resilient element 122 includes elastic springs, mechanical springs or gas springs. In still other embodiments, the resilient element is located at or near the pivot location 118.

As described herein, the placement of the undershot rotating element 52 with respect to the cutting bar 34, and in particular to the rotational axis of the rotary cutters 42, positively moves the crop across the rotary cutters 42 and to the crop conditioner 84. The location of the auger at the trailing edges of the rotary cutters provides a positive directional movement of the cut crop instead of allowing it to hesitate on the top of the rotary cutters 42. Additional crop directional control devices, such as curtains or drapes to direct the cut crop, are therefore unnecessary. Consequently, not only is the cost of the crop directional control devices avoided, but clogging issues associated with such devices is avoided as well.

FIG. 6 illustrates a top plan view of the cutting bar 34, rotary cutters 42, the undershot rotating element 52, and the crop conditioner 84. As can be seen, the splines 94 of each of the conditioner rolls 86 and 88 extends along the length thereof a distance which is greater that the distance spanned by the paddles 68 of the undershot rotating element. The length of the splines 94 extends longer than the length of the paddles 68 such that the ends of splines 94 terminate at a first location 126 and a second location 128. Consequently, cut crop, which is not sufficiently moved by the flightings 62 and 64 toward the center of the undershot rotating element, is still moved into the crop conditioner 84 for conditioning. As seen in FIG. 6, the splines 94 are curvilinear, wherein the outer ends of the splines 94 lead the center section of the splines 94 in the direction of rotation. In another embodiment, the center section of the splines 94 leads the ends in the direction of rotation.

In FIG. 6, rotary cutters 42 are shown in one stationary position to illustrate that every other rotary cutter 42 is aligned at an angle of approximately ninety degrees with respect to an adjacent rotary cutter 42. As seen in FIG. 6, the trailing edge 103, as also seen in FIG. 5, is determined by the rotary cutter knife 108 at its full extension away from the rotary cutters 42.

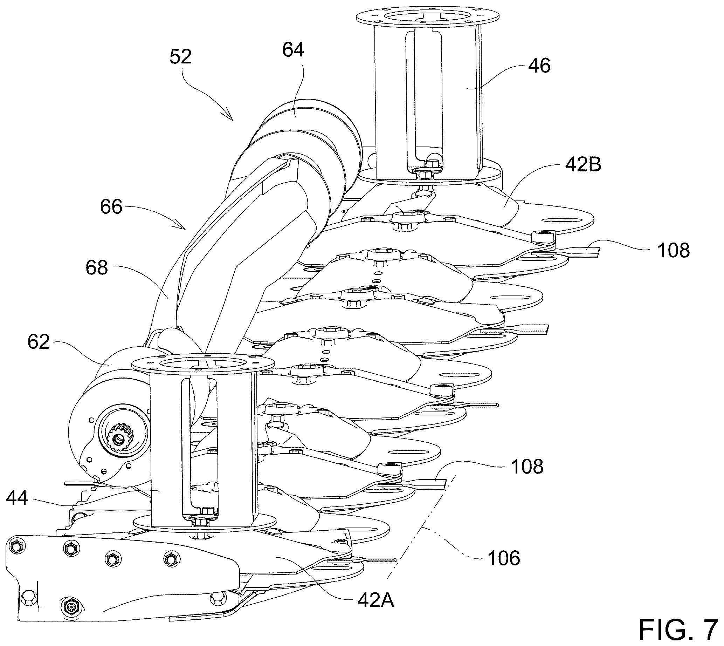

FIG. 7 illustrates a perspective view of the undershot converging auger 52 disposed above the rotary cutters 42 supported by the cutting bar support 36 and converging drums 44 and 46 of FIG. 2. In this embodiment, however, the converging drums 48 and 50 are not included. A drive mechanism (not shown) extends through the converging drums 44 and 46 to move the rotary cutters 42A and 42B. In other embodiments, the converging drums 44 and 46 are not included and are not required for operation of the undershot rotating element 52.

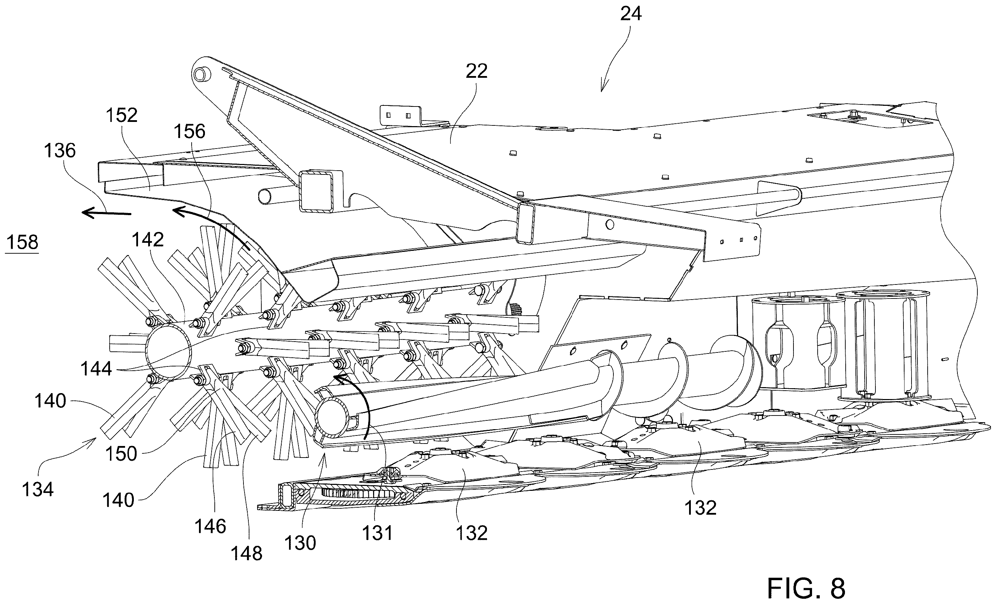

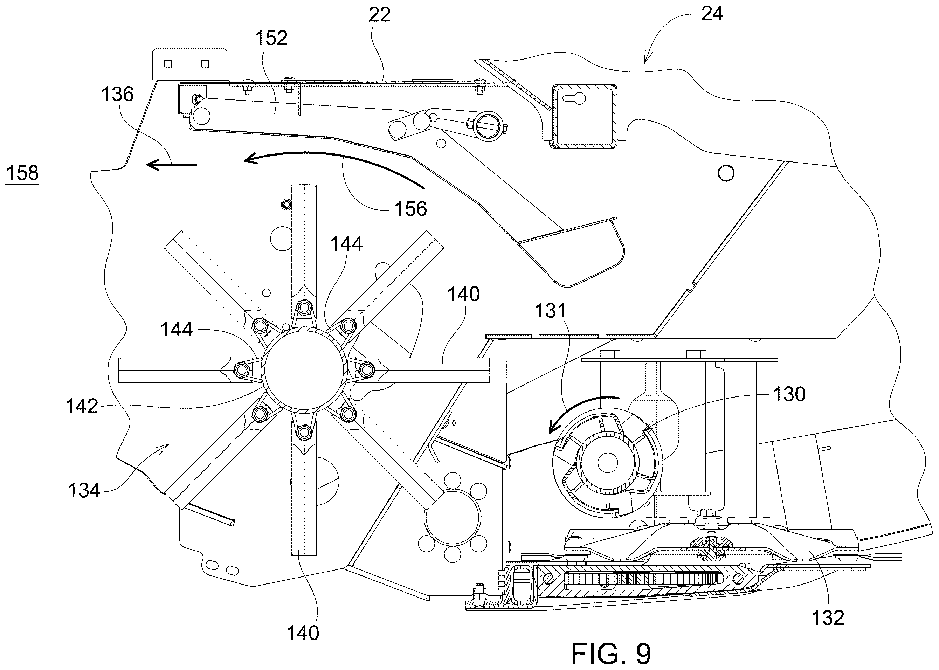

FIGS. 8 and 9 illustrate another embodiment of the present disclosure including a converging auger 130, rotating in a direction 131 as illustrated, located above at least a portion of, or subtended by, a plurality of rotary cutters 132. The converging auger 130 is subtended by a trailing edge of the rotary cutters 132, which has been previously described with respect to other embodiments. In this embodiment, the overshot converging auger 72 of FIG. 4 is not included and an impeller conditioner 134 is used instead of the crop conditioner 84 of FIG. 4. The impeller conditioner 134 rotates in a direction 136 and conditions cut crop which is received after being directed between the rotating element 130 and the rotary cutters 132 of the harvesting header 24.

The impeller conditioner 134 includes a plurality of projecting elements or tines 140 which extend from a cylinder 142. Each of the tines 140 are coupled to the cylinder 142 at a plurality of brackets 144 extending from the cylinder 142. The tines 140 include a Y shaped configuration having a first leg 146 and a second leg 148 extending from a central portion 150 coupled to the bracket 144. The Y-shaped tine 140 is loosely coupled to the bracket 144 such that rotation of the cylinder 142 causes the tines to flail against the cut crop to condition the crop.

The harvesting header 24 includes shield 152 supported by the housing 22 and/or frame (not shown). The shield 152 is spaced from ends of the first leg 146 and second leg 148 to provide a passage 156 for the cut crop which is moved by the rotating element 130 toward the impeller conditioner 134 and upwardly toward the exposed surface of the shield 152. Contact of the tines 140 with the cut crop moving though the passage 156 forces the cut crop toward the shield 152 such that the cut crop is conditioned by movement through the passage 156. The conditioned cut crop then moves to an exit 158 where it is deposited in the field, as previously described.

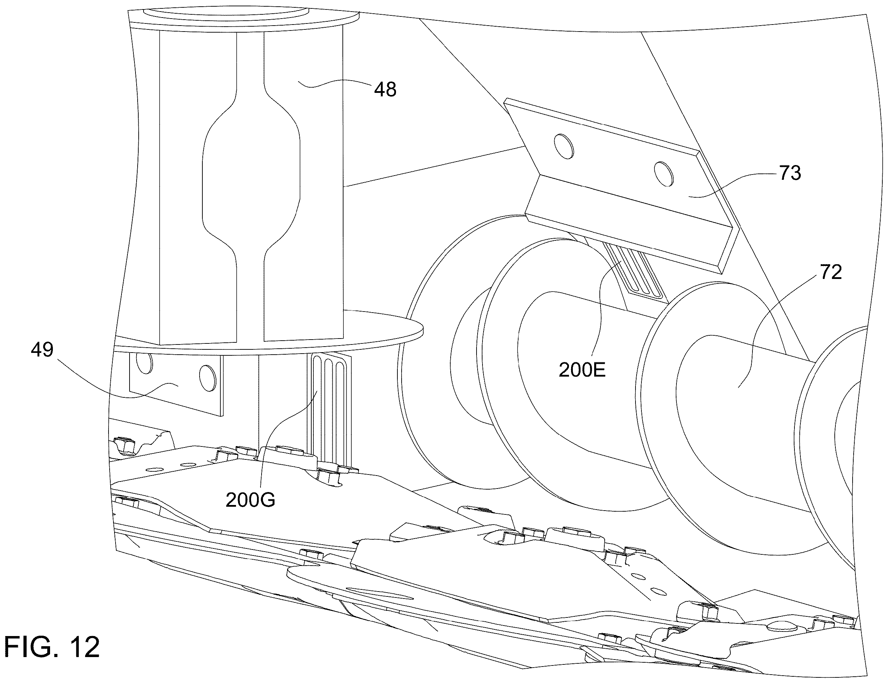

In a still further embodiment as schematically shown in Figs. 11 and 12 the crop harvesting machine may include only the second converging auger 72 and does not include the first converging auger 52. Fig. 11 is similar in content to Fig. 4 but is viewed from the opposite side of the machine 10 as compared to Fig. 4. Fig. 12 is an enlarged perspective view in the area of the first end 72.1 of the converging auger 72 and in the area of the converging drum 48.

Any of the converging augers 52, 72 or 130, or any of the converging drums 44, 46, 48 or 50 may be described as a crop converging mechanism. The crop converging mechanism may also take other forms, such as paddles or a conveyor.

### Moisture Sensors:

The present disclosure is focused on improved systems for measuring moisture content in a crop harvesting machine such as the mower conditioner 10. Moisture content is a significant variable in calculating yield content of any crop. Density of water is significantly higher and adds most of the mass to freshly cut, nutrient rich hay and forage plants. While water content is easily measured for row crop crops in a combine, bales for dry hay in a baler, and for forage passing through the chute of a self-propelled forage harvester, current manufacturers of mowing and conditioning implements do not offer on-board moisture measurement.

Water in cut and formed windrows complicates hay and forage harvesting processes. High moisture windrows require longer spans to dry and, there are differences in projected or subsequent operations. Farm management expertise is needed to optimally prepare, package, ship, and store hay. Production changes for crop moisture delay and further complicates farming practices for hay & forage production. Farming complexity can lead to issues deteriorating harvest value for farm managers; both in yield quantity and quality.

Examples of operational complications include: a hay field left an extra day to dry is reduced to salvage value because of an unexpected rain shower, overloaded forage transports compact soils, unplanned field passes add input costs, extra trips to haul loads nearer feedlots takes time, high silage moisture deteriorates the value of a pile, and so forth.

In one embodiment at least one moisture sensor 200 is located upstream of the crop conditioner 84 and configured to sense a moisture content of the cut crop material. The at least one moisture sensor 200 may be located adjacent to one of the converging augers 52 or 72. The at least one moisture sensor may be located adjacent to at least one of the converging drums 44, 46, 48, 50.

The at least one moisture sensor 200 may be any suitable type of moisture sensor. In one embodiment the at least one moisture sensor 200 is configured to measure conductivity or electrical resistance between two components of the crop harvesting machine 10. Such a moisture sensor may measure conductivity, or simply resistance, between paired elements between which the cut crop material passes. The electrodes may be isolated from other conductive elements. The conductivity or electrical resistance may be measured as a voltage drop between electrodes.

Electrical flow of known voltage can be provided to at least one crop moisture sensing electrode. When crop containing moisture is expelled through the moisture sensing elements, it completes the electrical circuit. Moisture content may be evaluated for crop based on the electrical conductivity between various machine components and grounding elements. With drier crop, resistance will be higher. Conversely, resistance will be lower with wetter crop. Since electrical flow is measured, the machine components selected as electrodes may be fabricated with materials having excellent conductivity and may be exposed to environmental factors including crop with high moisture content. Thus, the machine components selected as electrodes may be constructed of aluminum, copper, or plated steel materials. Or, they may have isolated portions, electrodes, manufactured of these materials.

It is also desirable for the machine component selected as an electrode to be in a location where the flow of cut crop material is consistently forced into reliable engagement with the machine component so that there is a reliable measurement of the conductivity or resistivity of the cut crop material. A measure of a crop's resistance to electrical flow is impacted by crop pressure against the electrode and ground. To induce crop pressure against electrodes and grounding portions, machine components with a relative angle to crop flow may be selected. For that reason, among others, it is desirable for the conductivity or resistivity of the cut crop material to be measured in an area of converging flow, upstream of the crop conditioner 84, where the volume of cut crop material is being compressed against the machine component by the various forces acting on the stream of cut crop material. Thus, the areas adjacent the converging drums and/or the converging augers are particularly suitable for moisture sensor placement.

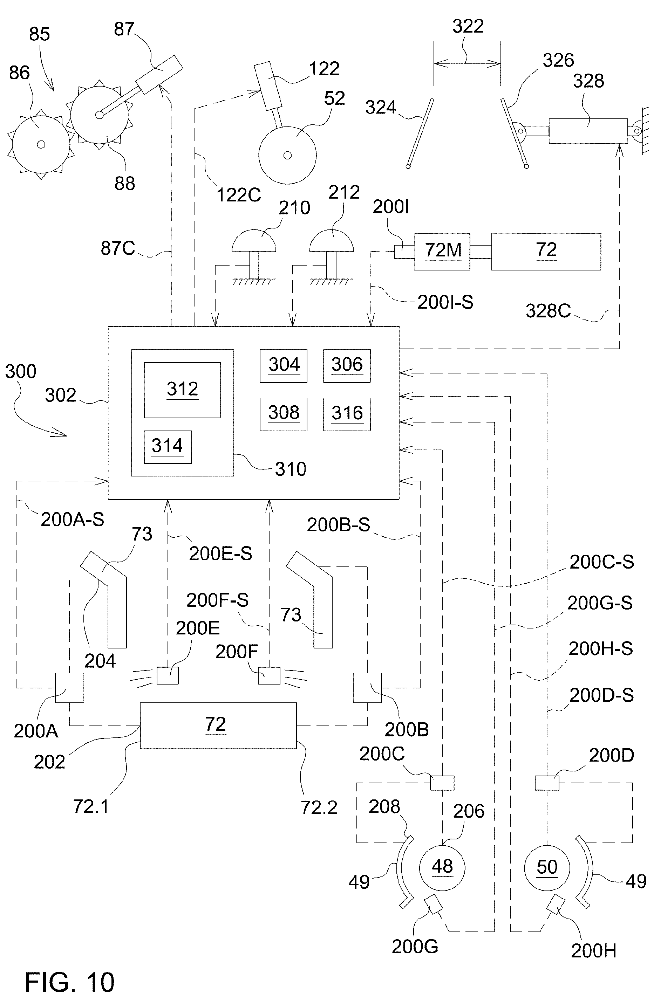

One example of the at least one moisture sensor 200 configured to measure a conductivity or electrical resistance between two components of the crop harvesting machine 10 is shown schematically in Figs. 4 and 10 as moisture sensor 200A. The moisture sensor 200A may include one electrode 202 attached to the second converging auger 72 and a second electrode 204 attached to the scraper 73. The scraper 73 may be referred to as a fixed structure 73 fixed relative to the header frame 30. As previously noted, the scraper 73 may be mounted to the header frame 30 in an electrically isolated manner, which allows the scraper 73 to be charged as the anode and the grounded second converging auger 72 may be used as the cathode of the moisture sensor 200 to detect the moisture content of the cut crop material flowing through the space between second converging auger 72 and the scraper 73.

It will be appreciated that the moisture sensor 200 configured to measure a conductivity or electrical resistance between two components of the crop harvesting machine 10 may include a conventional electrical circuit configured to detect a voltage drop between two electrodes. One example of such a circuit is a Wheatstone bridge. Although the schematic drawings here may depict the sensor itself as mounted on one of the structures, that is not required. The voltage sensing circuit may be located anywhere, and it is only the location of the electrodes that determines the machine components between which the flow of cut crop material is being examined and the "location" of the moisture sensor. The two selected components are electrically isolated from each other and when the two components are connected to the electrodes of the sensor the electrical circuit is completed by flow of electric current through the cut crop material in the space between the two machine components. Thus, the measured voltage drop in the electrical circuit is a measure of the conductivity or resistance of the crop material which is heavily dependent on the moisture content of the crop material.

As schematically shown in Fig. 10 the at least one moisture sensor 200 may include two such moisture sensors 200A and 200B located at or near opposite ends 72.1 and 72.2 of the second converging auger 72. The moisture sensors 200A and 200B may be described as a first moisture sensor 200A located closer to a first end 72.1 than to a second end 72.2 of the converging auger 72, and a second moisture sensor 200B located closer to the second end 72.2 than the first end 72.1 of the converging auger 72. The moisture sensors 200A and 200B may generate signals 200A-S and 200B-S which are communicated to controller 302 described below.

Another example of the at least one moisture sensor 200 configured to measure conductivity or electrical resistance between two components of the crop harvesting machine 10 is shown schematically in Fig 10 as moisture sensor 200C. The moisture sensor 200C may include one electrode 206 attached to the third converging drum 48 and a second electrode 208 attached to the deflector plate 49. The deflector plate 49 may be referred to as a fixed structure 49 fixed relative to the header frame 30. As previously noted the deflector plate 49 may be mounted to the header frame 30 in an electrically isolated manner, which allows the deflector plate 49 to be charged as the anode and the grounded converging drum 48 may be used as the cathode of the moisture sensor 200 to detect the moisture content of the cut crop material flowing through the space between deflector plate 49 and the converging drum 48. The first converging drum 44 could also be used as the cathode instead of the third converging drum 48.

As schematically shown in Figs. 2 and10 the at least one moisture sensor 200 may include two such moisture sensors 200C and 200D located adjacent the converging drums 48 and 50. The moisture sensors 200C and 200D may be described as a first moisture sensor 200C located closer to the first end 72.1 than to the second end 72.2 of the converging auger 72, and a second moisture sensor 200D located closer to the second end 72.2 than the first end 72.1 of the converging auger 72. The moisture sensors 200C and 200D may generate signals 200C-S and 200D-S which are communicated to controller 302.

In another embodiment the at least one moisture sensor 200 may be configured as a radiant energy sensor. Such a radiant energy sensor may detect characteristics such as relative radiant signal reflectance, absorption, permeability, permittivity, attenuation or scatter of different cut crop materials passing through a transmitted electromagnetic field. The characteristic may be detected or measured as a difference between a transmitted and a received radiant signal. Examples of such radiant energy sensors include radar sensors, LIDAR sensors, infrared sensors and others. Each such sensor will typically include a transmitter component and a receiver component, although the transmitter and receiver may sometimes be combined in a single unit.

Since the dielectric constant for dry air is nearly 'one', that of paper is approximately '3.7', and water is greatly higher at almost '80', moisture content of freshly cut crop can greatly impact permittivity readings. Similar in fashion, water-damaged or 'yellowed' stems, 'brown' or deadened branches, can be determined apart from 'green' or healthy stems in a white lighted environment using imaging spectrometry. Foliage differences are also detectable via attenuation, scatter, or loss of electromagnetic signal. Specific wavelengths rebound abnormally and received differently between cylindrical stems, sheets of trifoliate leaves, and growth nodes. Crop loss due to infestation or disease may be discoverable.

One example of the at least one moisture sensor 200 configured as a radiant energy sensor is shown schematically in Figs. 10 and 12 as moisture sensor 200E. The radiant energy sensor 200E is located and arranged to detect the moisture content of the flow of cut crop material in the area between the converging auger 72 and a fixed structure fixed relative to the header frame 30. The fixed structure may for example be the previously described scraper 73.

As schematically shown in Fig. 10 the at least one moisture sensor 200 may include two such moisture sensors 200E and 200F located at or near opposite ends 72.1 and 72.2 of the converging auger 72. The moisture sensors 200E and 200F may be described as a first moisture sensor 200E located closer to the first end 72.1 than to the second end 72.2 of the converging auger 72, and a second moisture sensor 200F located closer to the second end 72.2 than the first end 72.1 of the converging auger 72. The moisture sensors 200E and 200F may generate signals 200E-S and 200F-S which are communicated to controller 302.

Another example of the at least one moisture sensor 200 configured as a radiant energy sensor is shown schematically in Figs. 10 and 12 as moisture sensor 200G. The radiant energy sensor 200G is located and arranged to detect the moisture content of the flow of cut crop material in the area between the converging drum 48 and a fixed structure fixed relative to the header frame 30. The fixed structure may for example be the previously described deflector plate 49.

As schematically shown in Fig. 10 the at least one moisture sensor 200 may include two such moisture sensors 200G and 200H located adjacent the converging drums 48 and 50. The moisture sensors 200G and 200H may be described as a first moisture sensor 200G located closer to the first end 72.1 than to the second end 72.2 of the converging auger 72, and a second moisture sensor 200H located closer to the second end 72.2 than the first end 72.1 of the converging auger 72. The moisture sensors 200G and 200H may generate signals 200G-S and 200H-S which are communicated to controller 302.

All of the moisture sensors 200 may be at least in part adjustably mounted relative to the header frame 30. Adjustability and universal mounting are desirable to address shifts in instrumentation placement for proper perspective. Simple fastening like a sticky surfaces, quick connect fasteners, or magnets may be used. Electrocardiogram electrodes used for medical purposes exemplify flexible, low-cost, and versatile instrument placement and such electrodes may be used here. Simple one time use sticky discs may be attached to the machine components and the sensors may be electrically connected to the sticky discs using alligator clip connectors.

For example, the moisture sensors 200E and 200F may be releasably clamped in place to a structure affixed to the header frame 30, such as one of the scrapers 73. Or the moisture sensors 200E and 200F may be adjustably mounted to a structure affixed to the header frame 30, such as one of the scrapers 73 using strips of Velcro or other hook and loop mounting material. This allows the operator of the crop harvesting machine 10 to adjust the location of the moisture sensor 200 to a preferred location as operating conditions change.

In another embodiment the at least one moisture sensor 200 may be configured as a mechanical power sensor. Measures of mechanical power include speed, force, distance (gap), torque, pressure, and flow of the stream 80 of cut crop material. Each such measure offers insight pertaining to quantity of moisture-laden crop that is being cut by the mower, converged by drums and augers, passing between conditioning elements, and displaced by swath flaps, forming panels, and vanes into a windrow. In essence, mowing and conditioning implements are considered to 'pump' hay, albeit with pressure relief and flow control.

One example of the at least one moisture sensor 200 configured as a mechanical power sensor is shown schematically in Fig. 10 as moisture sensor 200I. The mechanical power energy sensor 200I may measure a flow of electrical power provided to drive motors for the converging augers and/or converging drums. For example, a drive motor 72M may drive converging auger 72, as schematically illustrated in Fig. 10. Increased power draws by those drive motors corresponds to an increased moisture content of the cut crop flowing past those components. Other examples of mechanical power sensors are shown in U.S. Patent Application Publication No. 2023/0354746, which is incorporated herein by reference.

### The Control System:

As schematically illustrated in Fig. 10, the crop harvesting machine 10 may include a control system 300 including a controller 302. The controller 302 is configured to receive input signals from the various sensors, such as the moisture sensors 200. The signals transmitted from the various sensors to the controller 302 are schematically indicated in Fig. 10 by lines connecting the sensors to the controller with an arrowhead indicating the flow of the signal from the sensor to the controller 302.

Similarly, the controller 302 will generate control signals for controlling the operation of the various actuators such as actuators 87, 122 and 328 discussed below.

Controller 302 includes or may be associated with a processor 304, a computer readable medium 306, a data base 308 and an input/output module or control panel 310 having a display 312. An input/output device 314, such as a keyboard, joystick or other user interface, is provided so that the human operator may input instructions to the controller. It is understood that the controller 302 described herein may be a single controller having all of the described functionality, or it may include multiple controllers wherein the described functionality is distributed among the multiple controllers.

Various operations, steps or algorithms as described in connection with the controller 302 can be embodied directly in hardware, in a computer program product 316 such as a software module executed by the processor 304, or in a combination of the two. The computer program product 316 can reside in RAM memory, flash memory, ROM memory, EPROM memory, EEPROM memory, registers, hard disk, a removable disk, or any other form of computer-readable medium 306 known in the art. An exemplary computer-readable medium 306 can be coupled to the processor 304 such that the processor can read information from, and write information to, the memory/ storage medium. In the alternative, the medium can be integral to the processor. The processor and the medium can reside in an application specific integrated circuit (ASIC). The ASIC can reside in a user terminal. In the alternative, the processor and the medium can reside as discrete components in a user terminal. The term "processor" as used herein may refer to at least general-purpose or specific-purpose processing devices and/or logic as may be understood by one of skill in the art, including but not limited to a microprocessor, a microcontroller, a state machine, and the like. A processor can also be implemented as a combination of computing devices, e.g., a combination of a DSP and a microprocessor, a plurality of microprocessors, one or more microprocessors in conjunction with a DSP core, or any other such configuration.

The term "processor" as used herein may refer to at least general-purpose or specific-purpose processing devices and/or logic as may be understood by one of skill in the art, including but not limited to a microprocessor, a microcontroller, a state machine, and the like. A processor can also be implemented as a combination of computing devices, e.g., a combination of a DSP and a microprocessor, a plurality of microprocessors, one or more microprocessors in conjunction with a DSP core, or any other such configuration.

The control panel 310 may for example be physically located on the crop harvesting machine 10, for example in the cab 20, such that the control panel 310 is supported directly or indirectly from the frame 12. Optionally, or additionally, the control panel 310 or some portion thereof may be remotely located, such as on a tractor or on a handheld device carried by a human operator. Further, in the event of an autonomous machine 10 the control panel 310 or some portion thereof may be located at a remote-control station and may be communicated with the controller 302 wirelessly.

The controller 302 may be operably associated with the moisture sensors 200 and configured to receive location data regarding a location of the crop harvesting machine 10 in a field via GNSS receivers 210 and 212 and to generate a moisture content map based at least partially on data from the first and second moisture sensors and the location data. The moisture map may for example be displayed on display 312. The GNSS receiver 210 may be located on the vehicle 10 and the GNSS receiver 212 may be located on the implement 24.

The controller 302 may be configured to adjust an actuator, such as 87, to adjust a width of a passage through which the cut crop material flows. For example, as seen in Fig. 3, the crop conditioner 84 may include the first conditioner roll 86 supported by the header frame 30 for rotation about a first conditioner roll axis 86.1 and the second conditioner roll 88 supported by the header frame 30 for rotation about a second conditioner roll axis 88.1. The first conditioner roll 86 and the second conditioner roll 88 may be configured to rotate in opposite directions about each of the respective conditioner roll axes 86.1, 88.1. The "passage" through which crop material flows may be a conditioning gap 85 between the conditioner rolls 86 and 88. That conditioning gap 85 may be adjusted by an actuator 87 schematically shown in Fig. 10.

The controller 302 may send a command signal 87C to the actuator 87 to control the same. It will be understood that the command signal 87C may be in the form of an electrical signal sent to an electro-hydraulic control valve (not shown) associated with the actuator 87, so that a hydraulic flow to the actuator 87 is controlled in response to the electrical command signal 87C.

In another embodiment a schematically shown in Fig. 10, the "passage" through which crop material flows may be a forming gap 322 between a pair of adjustably angled forming shields 324 and 326 located downstream of the crop conditioner 84. An actuator 328 may adjust the forming gap 322 in response to a command signal from controller 302. In another embodiment, the "passage" through which crop material flows may be the space 112 between the converging auger 52 and the rotary cutters 42 as seen in Fig. 5, and the dimension of that passage may be adjusted with actuator 122. The controller 302 may send a command signal 122C to the actuator 122.

Other actuators which could be controlled is response to measured moisture content include swath flap lift actuators, forming panel float actuators, and header cutting speed and machine advance speed actuators.

Thus, it is seen that the apparatus and methods of the embodiments disclosed herein readily achieve the ends and advantages mentioned as well as those inherent therein. While certain preferred embodiments have been illustrated and described for purposes of the present disclosure, numerous changes in the arrangement and construction of parts and steps may be made by those skilled in the art, which changes are encompassed within the scope and spirit of the present invention as defined by the appended claims.

## Claims

1. A crop harvesting implement (24) for cutting crop material (13), comprising:
a frame (30);
a cutting bar (34) supported by the frame, the cutting bar including a plurality of rotary cutters (42) disposed along an axis which is transverse to a forward working direction of the crop harvesting implement, the rotary cutters being configured to cut the crop material;
a crop conditioner (84) configured to condition the cut crop material wherein the crop conditioner is supported by the frame along an axis transverse to the working direction and rearward of the cutting bar with respect to the working direction;
a crop converging mechanism (52, 72, 130, 44, 46, 48, 50) supported by the frame, the crop converging mechanism being configured to move the cut crop material in a downstream direction from the plurality of rotary cutters toward the crop conditioner; and
at least one moisture sensor (200) located upstream of the crop conditioner and configured to sense a moisture content of the cut crop material.

2. The crop harvesting implement of claim 1 wherein:
the at least one moisture sensor (200) is located adjacent to the crop converging mechanism (52, 72, 130, 44, 46, 48, 50).

3. The crop harvesting implement of claim 1 or 2, wherein:
the crop converging mechanism includes a converging auger (52, 72, 130) configured to rotate about a rotational axis; and
the at least one moisture sensor (200) is configured to measure conductivity or electrical resistance between the converging auger and a fixed structure (73) fixed relative to the frame (30).

4. The crop harvesting implement according to at least one of the preceding claims, wherein:
the fixed structure includes a scraper (73) supported from the frame (30) and arranged to scrape cut material off of the converging auger (52, 72, 130).

5. The crop harvesting implement according to at least one of the preceding claims, wherein:
the at least one moisture sensor (200) is a radiant energy sensor (200E, 200F, 200G, 200H).

6. The crop harvesting implement according to at least one of the preceding claims, wherein:
the crop converging mechanism includes a first converging drum (48) disposed closer to a first end than to a second end of the cutting bar (34) and a second converging drum (50) disposed closer to the second end than to the first end of the cutting bar, wherein each of the first converging drum and second converging drum rotate in opposite directions to move the cut crop material toward a center of the cutting bar;
the at least one moisture sensor (200) is located adjacent to at least one of the converging drums;
wherein the at least one moisture sensor (200C, 200D) is configured to measure conductivity or electrical resistance between the at least one of the converging drums (48, 50) and a fixed structure (49) fixed relative to the frame.

7. The crop harvesting implement according to at least one of the preceding claims, wherein:
the fixed structure includes a deflector plate (49) supported from the frame (34) so that the cut crop material flows between the at least one of the converging drums (48, 50) and the deflector plate.

8. The crop harvesting implement according to at least one of the preceding claims, wherein:
the crop converging mechanism includes a first converging drum (48) disposed closer to a first end than to a second end of the cutting bar (34) and a second converging drum (50) disposed closer to the second end than to the first end of the cutting bar, wherein each of the first converging drum and second converging drum rotate in opposite directions to move the cut crop material toward a center of the cutting bar;
the at least one moisture sensor (200) is located adjacent to at least one of the converging drums;
the at least one moisture sensor (200) is a radiant energy sensor (200G, 200H).

9. The crop harvesting implement according to at least one of the preceding claims, wherein:
the at least one moisture sensor includes a first moisture sensor (200G) located adjacent to the first converging drum (48) and a second moisture sensor (200H) located adjacent to the second converging drum (50).

10. The crop harvesting implement according to at least one of the preceding claims, wherein:
the at least one moisture sensor (200) includes a first moisture sensor (200A, 200C, 200E, 200G) located closer to a first end than to a second end of the crop converging mechanism and a second moisture sensor (200B, 200D, 200E, 200H) located closer to the second end than the first end of the crop converging mechanism.

11. The crop harvesting implement according to at least one of the preceding claims, further comprising:
a controller (302) operably associated with the first and second moisture sensors (200), the controller being configured to receive location data regarding a location of the crop harvesting implement in a field and to generate a moisture content map based at least partially on data from the first and second moisture sensors and the location data.

12. The crop harvesting implement according to at least one of the preceding claims, further comprising:
a controller (302) operably associated with at least one moisture sensor (200), the controller being configured to adjust an actuator (87, 122, 328) to adjust a width of a passage (85, 112, 322) through which the cut crop material flows.

13. The crop harvesting implement according to at least one of the preceding claims, wherein:
the crop conditioner includes a first conditioner roll (86) supported by the frame (30) for rotation about a first conditioner roll axis (86.1) and a second conditioner roll (88) supported by the frame for rotation about a second conditioner roll axis (88.1), wherein the first conditioner roll and the second conditioner roll are configured to rotate in opposite directions about each of the respective conditioner roll axes; and
the passage is a conditioning gap (85) between the first and second conditioner rolls.

14. The crop harvesting implement according to at least one of the preceding claims, wherein:
the passage is a forming gap (322) between a pair of adjustably angled forming shields (324, 326) located downstream of the crop conditioner (84).

15. The crop harvesting implement according to at least one of the preceding claims, wherein:
the at least one moisture sensor (200) is at least in part adjustably mounted relative to the frame (30).
